# EUROPEAN PATENT APPLICATION

(11) **EP 1 369 943 A1**
(43) Date of publication of application: **10.12.2003**
(21) Application number: 03252123.9
(22) Date of filing: 03.04.2003
(51) Int. Cl.: H01M 8/02

(54) **Fuel cell separator, production method, and solid polymer fuel cells**

(30) Priority: 03.04.2002 JP 2002101026
(71) Applicant: Nisshinbo Industries, Inc., Chuo-ku, Tokyo (JP)
(72) Inventor: Nakajima, Saori, c/o Nisshinbo Industries, Inc., Chiba-shi, Chiba-ken (JP); Horiuchi, Ayumi, c/o Nisshinbo Industries, Inc., Chiba-shi, Chiba-ken (JP)
(74) Representative: Stuart, Ian Alexander

(57) **Abstract**

Fuel cell separators which are highly hydrophilic and undergo little leaching of substances that inhibit electrical power generation can be produced by shaping a composition composed primarily of a metal oxide, an electrically conductive powder and a binder to form a shaped body, coating and impregnating the shaped body with a hydrophilic resin, then curing the hydrophilic resin under applied heat.

## Description

The present invention relates to a method of making fuel cell separators having good hydrophilic properties. The invention also relates to fuel cell separators obtained by such a method, and to solid polymer fuel cells in which such separators are used.

### BACKGROUND

Fuel cells are devices which, when supplied with a fuel such as hydrogen and with atmospheric oxygen, cause the fuel and oxygen to react electrochemically, producing water and directly generating electricity. Because fuel cells are capable of achieving a high fuel-to-energy conversion efficiency and are environmentally friendly, they are being developed for a variety of applications, including small-scale local power generation, household power generation, simple power sources for isolated facilities such as campgrounds, mobile power sources such as for automobiles and small boats, and power sources for satellites and space development.

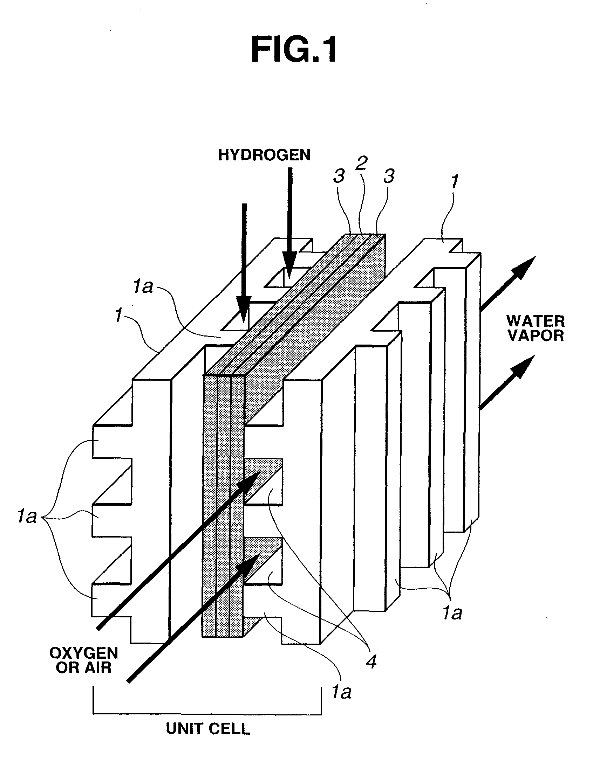

As shown in FIG. 1, such fuel cells, and particularly solid polymer fuel cells, are built in the form of modules composed of a stack of at least several tens of unit cells. Each unit cell has a pair of plate-like separators 1, 1 with a plurality of ribs 1a on either side thereof that define channels for the flow of gases such as hydrogen and oxygen. Disposed between the pair of separators 1, 1 in the unit cell are a solid polymer electrolyte membrane 2 and gas diffusing electrodes 3 made of carbon paper.

The role of the fuel cell separator 1 is to confer each unit cell with electrical conductivity, to provide channels for the supply of fuel and air (oxygen) to the unit cells, and to serve as a separating or boundary membrane between adjacent unit cells. Qualities required of the separator 1 include high electrical conductivity, high gas impermeability, electrochemical stability and hydrophilic properties.

The separator is required in particular to be capable of rapidly removing the water which is produced by the reaction of the gases and which has a large adverse influence on the fuel cell characteristics. To enable the rapid removal of water, among the foregoing qualities it is especially important that the separator 1 have good hydrophilic properties.

Fuel cell separator materials used in the prior art include liquid resin-impregnated bodies obtained by forming a shaped laminate of a graphite block that has been treated to make it gas-impermeable, a corrosion-resistant metal and an expanded graphite sheet, impregnating the laminate with a liquid resin, then curing the resin. Yet, separators made of such materials have poor hydrophilic properties.

A number of ways have been devised to enhance the hydrophilic properties of the separator. These include:
(1) prior incorporation into a separator substrate-forming material of a hydrophilic substance such as a metal oxide (e.g., alumina, silica, zeolite) or a hydrophilic resin (e.g., polyvinyl alcohol, polyethylene glycol, acrylic resin) (see JP-A 10-3931, etc.);
(2) coating a shaped substrate with the above-mentioned metal oxide or hydrophilic resin to form a hydrophilic coat (see JP-A 2000-251903, JP-A 2000-223131, JP-A 2001-93529, etc.); and
(3) subjecting a shaped substrate to surface treatment such as oxidation, acid treatment, plasma treatment, UV treatment, treatment with a surfactant, or treatment with a silane coupling agent.

However, in separators obtained by above method (1), metal ions and organic substances which inhibit the generation of electrical power by the fuel cell, sometimes referred to collectively herein as "electrical power generation inhibitors," leach out from the metal oxide and hydrophilic resin present in the separator substrate. Moreover, to increase the amount of the hydrophilic substance present in the surface layer, the separator must be given a higher content of this substance. Yet, doing so diminishes the physical properties of the separator proper.

Separators obtained by above method (2) have good initial properties, but are subject to hydrolysis and have a poor resistance to hot water. Hence, during long-term fuel cell operation, metal ions and organic substances leach from the separator and have an adverse effect on the electrolyte membrane and the catalyst. Also, to avoid a rise in the contact resistance, it is necessary to treat only the channel portions of the separator. This increases the complexity of the production steps and leads to higher costs.

Finally, in separators obtained by above method (3), surface treatment sometimes leads to a loss of strength and fails to provide long-lasting hydrophilic properties.

It is an object herein to provide a new and useful way of making fuel cell separators which are adapted to be hydrophilic, and preferably have a high hydrophilicity and from which the leaching of substances that inhibit electrical power generation by the fuel cell does not readily occur. Another aspect of the invention is to provide fuel cell separators which are obtained by such a method. A further aspect of the invention is to provide solid polymer fuel cells in which such separators are used.

We have discovered that separators obtained by shaping a composition composed primarily of a metal oxide, an electrically conductive powder and a binder to form a shaped body, coating and impregnating the shaped body with a hydrophilic resin, then curing the resin under applied heat have outstanding hydrophilic properties and can minimize the amount of electrical power generation inhibitors that leach out from the separator during fuel cell operation.

A first aspect of the invention provides a method of producing a fuel cell separator. The separator is produced by shaping a composition primarily comprising a metal oxide, an electrically conductive powder and a binder to form a shaped body, coating and impregnating the shaped body with a hydrophilic resin, then curing the hydrophilic resin.

The metal oxide used in the inventive method is preferably selected from among activated alumina, tin oxide, and mixtures thereof. The hydrophilic resin is preferably a hydrophilic epoxy resin, more preferably polyethylene glycol diglycidyl ether, and even more preferably polyethylene glycol diglycidyl ether having an epoxy equivalent weight of at least 300.

In a second aspect, the invention provides a fuel cell separator obtained by any fuel cell separator production method of the first aspect of the invention.

In a third aspect, the invention provides a solid polymer fuel cell comprising a plurality of stacked unit cells, each unit cell comprising a solid polymer membrane, a pair of electrodes disposed on either side of the polymer membrane, and a pair of separators disposed on either side of the pair of electrodes such as to form gas supplying and removing channels. Some or all of the separators within the fuel cell are fuel cell separators according to the second aspect of the invention.

### BRIEF DESCRIPTION OF THE DRAWINGS

FIG. 1 is a perspective view showing the unit cell construction in a typical fuel cell.
FIG. 2 shows a perspective view of a fuel cell separator according to one embodiment of the invention.

### DETAILED DESCRIPTION

The inventive method of producing fuel cell separators includes the steps of shaping a composition primarily comprising a metal oxide, an electrically conductive powder and a binder to form a shaped body, coating and impregnating the shaped body with a hydrophilic resin, then curing the hydrophilic resin.

The metal oxide used herein may be any that is both hydrophilic and stable in water, including hot water, that is, not subject to dissolution, exothermic reaction or degradation in water. Illustrative examples of suitable metal oxides include activated alumina, tin oxide and ruthenium oxide. Of these, the use of one or more selected from among activated alumina, and tin oxide is preferred.

No particular limitation is imposed on the average particle size of the metal oxide, although an average particle size of 0.1 to 500 µm is preferred. An average particle size of 10 to 100 µm is especially preferred for activated alumina, and an average particle size of 0.1 to 10 µm is especially preferred for tin oxide and ruthenium oxide.

In the practice of the invention, the electrically conductive powder may be any conductive powder commonly used in fuel cell separators. Illustrative examples include natural graphite, synthetic graphite, expanded graphite, carbon black, Ketjen black, acetylene black, amorphous carbon, metal fibers, and powders of metallic compounds such as ruthenium oxide. The average particle size of the conductive powder is not subject to any particular limitation, but is preferably from 0.1 to 300 µm, and most preferably 30 to 100 µm.

The binder may be suitably selected from such binders as thermosetting resins and thermoplastic resins commonly used in fuel cell separators. Specific examples of binders that may be used include phenolic resins, epoxy resins, acrylic resins, melamine resins, polyamide resins, polyamide-imide resins, polyetherimide resins and phenoxy resins.

Of the above conductive powders and binders, it is especially preferable to use a graphite powder in combination with a thermosetting resin. Such a combination enables the separator strength and electrical conductivity to be improved. Moreover, during curing of the hydrophilic resin, the hydrophilic resin reacts with the thermosetting resin, which discourages delamination and the leaching of electrical power generation inhibitors from the separator.

The relative proportions in which the metal oxide, the conductive powder and the binder are combined in the above composition are not subject to any particular limitation. For example, these components may be blended in respective amounts of 1 to 45 wt% of the metal oxide, 50 to 95 wt% of the conductive powder and 4 to 20 wt% of the binder.

Less than 1 wt% of the metal oxide may fail to provide a sufficient hydrophilic property enhancing effect. On the other hand, more than 45 wt% may increase the electrical resistance of the separator, lower its mechanical strength and compromise the processability of the separator-forming composition. The proportion of metal oxide is preferably from 1 to 20 wt%, and most preferably from 5 to 10 wt%.

From 1 to 20 wt% of a fibrous reinforcement, such as glass fibers, carbon fibers, whiskers or organic synthetic fibers (e.g., phenolic resin fibers, vinylon), may be added to enhance the strength of the separator.

Any technique commonly used for shaping separator substrates may be employed without particular limitation to shape the above composition.

The resulting shaped body may be either of dense or porous construction. If porous, the pore size is preferably from 0.1 to 10 µm, and most preferably from 0.8 to 5 µm.

The hydrophilic resin may be any which, when cured, is resistant to hot water (i.e., insoluble and non-eroding), and moreover does not undergo high-temperature creep. Illustrative examples include hydrophilic epoxy resins and hydrophilic phenolic resins.

As used herein, the term "hydrophilic resin" encompasses also the resin starting materials. The shaped body (separator substrate) is coated and impregnated with the hydrophilic resin in the form of an aqueous solution or dispersion of the resin or the resin starting materials.

Of the types of resins mentioned above, the use of a water-soluble epoxy compound having two or more epoxy groups is preferred. The use of polyethylene glycol diglycidyl ether is especially preferred.

The higher the number of ether linkages on the polyethylene glycol diglycidyl ether, the greater the ability of the ether, together with the dispersed metal oxide, to enhance the hydrophilic properties of the separator. Hence, the polyethylene glycol diglycidyl ether has an epoxy equivalent weight of preferably at least 300, and most preferably at least 500. The resin starting material composition may include also a monoepoxy compound such as phenyl glycidyl ether and a hydrophilic polymer dispersant.

Illustrative examples of suitable water-soluble epoxy compounds and dispersants include Denacol EX 861, Denacol EX 821, Denacol EX 830, Denacol EX 832, Denacol EX 841 and Denacol EX 1610 (all made by Nagase ChemteX Corporation); SR-8EG and SR-4PG (both made by Sakamoto Yakuhin Kogyo Co., Ltd.); Dicfine EN-0270 (made by Dainippon Ink & Chemicals, Inc.); and Queenstat NW-E new (made by Kotani Chemical Industry Co., Ltd.).

Any suitable technique may be selected to coat and impregnate the shaped body with the hydrophilic resin. Examples of suitable techniques include dip coating, spray coating and impregnation, under normal pressure, reduced pressure or applied pressure. The amount of hydrophilic resin impregnated is preferably at least about 0.1 wt%, preferably not more than 1 wt%, based on the weight of the shaped body.

Any desired technique may be used for curing the hydrophilic resin after coating and impregnation, although a curing technique that involves heating at 80 to 200 °C, and especially 160 to 200 °C, is preferred.

One way in which the inventive method for producing a fuel cell separator may be carried out is described below.

First, a composition obtained by mixing 1 to 45 wt% of the metal oxide, 50 to 95 wt% of the electrically conductive powder and 4 to 20 wt% of the binder in a predetermined ratio is kneaded to form a compound. The compound is then charged into a separator-forming mold, and molded under heat (150 to 160 °C) and pressure (10 to 50 MPa) for 5 to 10 minutes to form a molded body.

Using a suitable technique such as dip coating, the resulting molded body is then coated and impregnated with a solution of the hydrophilic resin (e.g., a water-soluble epoxy resin) in a suitable solvent such as water, thereby forming a hydrophilic substance layer on the surface of the molded body. The resin-coated and impregnated molded body is then heated to 160 to 200 °C to cure the hydrophilic resin, yielding a fuel cell separator.

The resulting fuel cell separator has excellent and long-lasting hydrophilic properties, in addition to which the level of power generation inhibitors such as metals that leach from the separator is low. These qualities enable fuel cells in which the separator is used to maintain a stable power generating efficiency over an extended period of time. Moreover, the use of both a metal oxide and a hydrophilic resin enables the hydrophilic properties to be enhanced while holding the amounts in which each of these components are employed to relatively low levels.

The fuel cell separator of the invention has an average gas permeability, as measured in accordance with the Equal Pressure Method of JIS K7126, of preferably 1.0×10⁻⁷ to 1.0×10⁻¹³ mol/m²·s·Pa or less, more preferably 1.0×10⁻⁷ to 1.0×10⁻¹¹ mol/m²·s·Pa, and most preferably 1.0×10⁻⁷ to 1.0×10⁻⁹ mol/m²·s·Pa. Too large a gas permeability may result in the leakage of fuel gas in a fuel cell into which the separator has been built.

The solid polymer fuel cell of the invention is made up of a plurality of stacked unit cells. Each unit cell is composed of a solid polymer membrane, a pair of electrodes disposed on either side of the polymer membrane, and a pair of separators disposed on either side of the pair of electrodes such as to form gas supplying and removing channels. The above-described fuel cell separator of the present invention is used as some or all of the separators within the fuel cell.

Specifically, it is advantageous for at least 50%, preferably 50 to 100%, more preferably 70 to 100%, and most preferably 80 to 100%, of all the separators in the fuel cell to be fuel cell separators according to the invention. If fuel cell separators according to the invention account for too low a proportion of all the separators in the fuel cell, the energy output by the fuel cell tends to decrease with continuous operation over a long period of time, making it difficult to achieve the objects and advantages of the invention. Those separators used in the fuel cell which are not fuel cell separators according to the present invention may be separators of a type commonly employed in fuel cells.

The solid polymer electrolyte membrane may be of a type which is commonly used in solid polymer fuel cells. Illustrative examples include proton-conducting ion-exchange membranes created from fluorocarbon resins, and specifically a polytrifluorostyrene sulfonic acid or a perfluorocarbonsulfonic acid (Nafion™). The surface of the electrolyte membrane is typically coated with a paste composed of a catalyst-supporting carbon powder dispersed in an organic solvent such as a perfluorocarbonsulfonic acid-containing lower fatty alcohol-water mixed solution (Nafion 117 solution). The catalyst supported by the carbon powder is generally platinum or an alloy of platinum with another metal.

The pair of electrodes situated on either side of the solid polymer electrolyte membrane may be made of, for example, carbon paper, carbon felt, or carbon cloth woven from carbon fiber yarn.

The electrolyte membrane and electrodes are integrally united by sandwiching the electrolyte membrane between the pair of electrodes and bonding under heat (120 to 130°C) and pressure.

Alternatively, the electrolyte membrane and the pair of electrodes may be united by bonding with an adhesive.

The resulting electrode/electrolyte membrane/electrode laminate is then mounted between a pair of separators such as to form flow channels capable of supplying and removing the fuel gas, thereby forming a unit cell. Mounting may be carried out by, for example, applying an adhesive to the areas of the separator, specifically the ribs, which come into contact with the electrodes.

By using the inventive fuel cell separator as some (preferably at least 50%) or all of the separators in the solid polymer fuel cell of the invention, the fuel cell is able to maintain a stable power generating efficiency over a long period of time, resulting in a high operating efficiency. The solid polymer fuel cell of the invention is thus particularly suitable as a mobile power source such as in automobiles and small boats.

### EXAMPLES

The following examples and comparative examples are provided to illustrate the invention, and are not intended to limit the scope thereof.

### Example 1

A fuel cell separator composition formulated as shown in Table 1 (Example 1) was blended to form a compound. The conductive powder used in the composition was a synthetic graphite powder having an average particle size of 60 µm, and the binder was a phenolic resin.

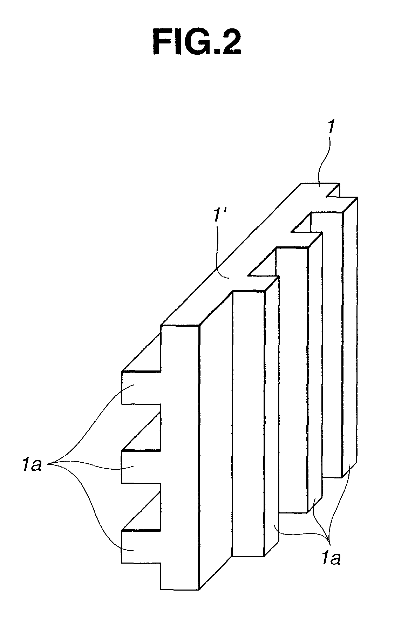

The compound was charged into a separator-forming mold and molded under heat (160°C) and pressure (19.6 MPa) for 5 minutes to produce a molded body 1' which is 100 mm long, 100 mm wide and 2.0 mm thick, and which has ribs on both the left and right sides as shown in FIG. 2.

The molded body 1' was subjected to hydrophilizing treatment. The treatment process involved coating and impregnating the molded body 1', under a reduced pressure of -0.07 Pa, with an aqueous solution of the water-soluble epoxy compound Denacol EX861 (made by Nagase ChemteX Corporation) so as to form a hydrophilic substance layer on the surface of the molded body 1', then heating to 170 °C so as to cure the hydrophilic resin. This treatment completed production of the fuel cell separator 1.

### Example 2

Aside from blending the fuel cell separator composition formulated as shown in Table 1 (Example 2) to form a compound, a fuel cell separator 1 was obtained in the same way as in Example 1.

### Comparative Example 1

Aside from blending the fuel cell separator composition formulated as shown in Table 1 (Comparative Example 1) to form a compound and not carrying out hydrophilizing treatment using a hydrophilic resin, a fuel cell separator was obtained in the same way as in Example 1.

### Comparative Example 2

Aside from blending the fuel cell separator composition formulated without a metal oxide as shown in Table 1 (Comparative Example 2) to form a compound, a fuel cell separator 1 was obtained in the same way as in Example 1.

### Comparative Example 3

Aside from blending the fuel cell separator composition formulated as shown in Table 1 (Comparative Example 3) to form a compound and not carrying out hydrophilizing treatment with a hydrophilic resin, a fuel cell separator 1 was obtained in the same way as in Example 1.

### Comparative Example 4

Aside from blending the fuel cell separator composition formulated as shown in Table 1 (Comparative Example 4) to form a compound and not carrying out hydrophilizing treatment with a hydrophilic resin, a fuel cell separator 1 was obtained in the same way as in Example 1.

**Table 1**

| | Fuel cell separator composition (parts by weight) | | | | | Hydrophilizing treatment |
|---|---|---|---|---|---|---|
| | Carbon Carbon | Resin Resin | Activated alumina | Tin oxide | Silica gel | |
| Example 1 | 80 | 10 | 10 | - | - | yes |
| Example 2 | 80 | 10 | - | 10 | - | yes |
| Comparative Example 1 | 90 | 10 | - | - | - | no |
| Comparative Example 2 | 90 | 10 | - | - | - | yes |
| Comparative Example 3 | 80 | 10 | 10 | - | - | no |
| Comparative Example 4 | 80 | 10 | - | - | 10 | no |

The initial characteristics (resistance, contact angle, water absorption time, bending test) and long-term durability (bending test, extraction test) were measured for each fuel cell separator obtained in the inventive examples and the comparative examples. The results are given below in Table 2.

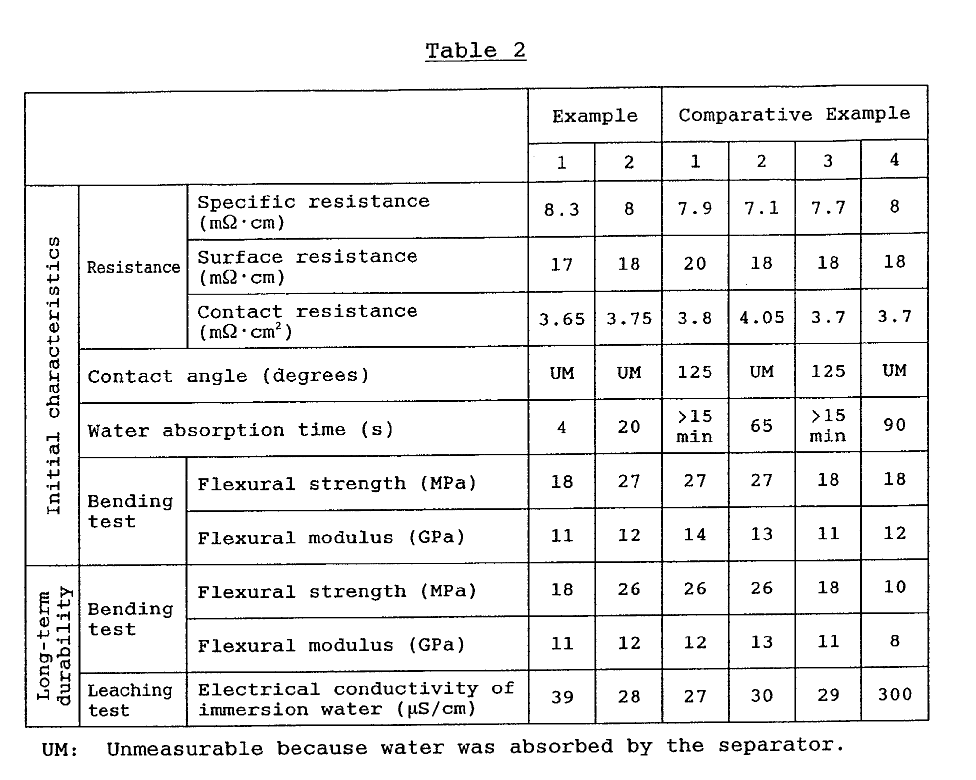

The above characteristics were measured as follows.
1. Specific Resistance:
   Measured by the four-probe method described in JIS H-0602.
2. Surface Resistivity:
   Measured using a Loresta SP Model MCP-T500 resistivity meter made by Mitsubishi Chemical Corporation.
3. Contact Resistance:
   The separator was placed between two smooth gold-plated copper plates, and the contact resistance was measured from the voltage drop across the plates when a fixed current was passed through.
4. Contact Angle:
   A drop of ion-exchanged water was deposited on the surface of a flat-lying separator with a pipette, and the contact angle of the water on the separator was measured using a FACE contact angle meter, model CA-D, made by Kyowa Interface Science Co., Ltd.
5. Water Absorption Test:
   Ion-exchanged water (0.0025 g) was deposited on the surface of the separator within a constant-temperature tank set at 80% humidity, and the time it took for the water to be absorbed by the separator surface was measured.
6. Bending Test:
   Measurements were carried out by the three-point bending test described in JIS K-6911.
7. Leaching Test:
   A 15 g piece of the separator was cut out, immersed in 400 g of ion-exchanged water, and heated at 90°C for 40 days, following which the electrical conductivity of the ion-exchanged water was measured.

It is apparent from Table 2 that the fuel cell separators obtained in Examples 1 and 2 according to the invention, each of which was produced by molding a body from a composition of primarily metal oxide, carbon and resin, then coating and impregnating the molded body with a water-soluble epoxy resin, were more water absorptive (hydrophilic) and underwent less leaching of electrical power generation inhibitors than the separators obtained in the comparative examples.

### Example 3

Carbon paper (made by Chemix Co., Ltd.) was used as the pair of electrodes sandwiching the solid polymer electrolyte membrane (Nafion™). The electrolyte membrane and the pair of electrodes were bonded by an ordinary method to form a monolithic electrode. The monolithic electrode was sandwiched between a pair of the fuel cell separators produced in Example 1, giving a unit cell having flow channels for supplying and removing fuel gas. A fuel cell was assembled by stacking together 50 of these unit cells, and tightening the stack with bolts and nuts.

The resulting fuel cell was confirmed to be capable of charging and discharging, and to function effectively as a fuel cell.

After being operated continuously for 500 hours, this assembled fuel cell had an output that was more than 90% of the initial output, indicating substantially no change in performance.

As described above and demonstrated in the examples, separators embodying the invention can have a high degree of hydrophilicity, undergo little leaching of substances that inhibit electrical power generation by the fuel cell, and can be easily and inexpensively produced.

In particular, when at least one metal oxide selected from among activated alumina, and tin oxide is used in the shaped body and a water-soluble epoxy compound is used to render the shaped body hydrophilic, there can be obtained a separator which has a high hydrophilicity, undergoes very little leaching of electrical power generation inhibitors, and has low resistance values.

## Claims

1. A method of producing a fuel cell separator, comprising the steps of:
shaping a composition primarily comprising a metal oxide, an electrically conductive powder and a binder to form a shaped body,
coating and impregnating the shaped body with a hydrophilic resin,
then curing the hydrophilic resin.

2. The method of claim 1, wherein the metal oxide is at least one selected from the group consisting of activated alumina, and tin oxide.

3. The method of claim 1 or 2, wherein the hydrophilic resin is a hydrophilic epoxy resin.

4. The method of claim 3, wherein the hydrophilic epoxy resin is polyethylene glycol diglycidyl ether.

5. The method of claim 4, wherein the polyethylene glycol diglycidyl ether has an epoxy equivalent weight of at least 300.

6. A fuel cell separator obtained by the method of any one of claims 1 to 5.

7. A solid polymer fuel cell comprising a plurality of stacked unit cells, each unit cell comprising a solid polymer membrane, a pair of electrodes disposed on either side of the polymer membrane, and a pair of separators disposed on either side of the pair of electrodes such as to form gas supplying and removing channels, wherein some or all of the separators within the fuel cell are fuel cell separators according to claim 6.
